# EUROPEAN PATENT SPECIFICATION

(11) **EP 2 009 141 B1**
(45) Date of publication and mention of the grant of the patent: **07.09.2016**
(21) Application number: 08252105.5
(22) Date of filing: 19.06.2008
(51) Int. Cl.: C23C 18/04, C23C 18/12, F01D 11/12, F01D 9/04, F01D 5/28, C04B 37/02, C04B 35/626, C04B 35/634

(54) **Thermal barrier system and bonding method**
Wärmesperrsystem und Bindungsverfahren dafür
Système de barrière thermique et procédé de liaison

(30) Priority: 19.06.2007 US 764888
(43) Date of publication of application: 31.12.2008
(73) Proprietor: United Technologies Corporation, Hartford, CT 06101 (US)
(72) Inventor: Strock, Christopher W., Kennebunk, Maine 04043 (US); Reynolds, George H., Sanford, Maine 04073 (US)
(74) Representative: Leckey, David Herbert

(56) References cited:
- US-A- 5 834 108
- US-A- 6 099 671
- US-A1- 2003 207 155
- US-A1- 2004 129 370

## Description

### BACKGROUND OF THE INVENTION

This invention relates to protective thermal barriers and, more particularly, to abradable ceramic barrier systems and methods of bonding to a substrate.

Components that are exposed to high temperatures, such as a component within a gas turbine engine, typically include protective coatings. For example, components within a gas turbine engine such as combustor liners, turbine blades, turbine vanes, and blade outer air seals typically include one or more coating layers that protect the component from erosion, oxidation, corrosion or the like to thereby enhance durability or maintain efficient operation of the engine. In particular, some conventional outer air seals include a relatively abradable ceramic coating that contacts relatively abrasive tips of the turbine blades during engine operation such that the blades abrade the coating upon operation of the engine. The abrasion between the coating and the blade tips provides a minimum clearance between these components such that gas flow around the tips of the blades is reduced to thereby maintain engine efficiency. Typically, the coating is formed using a thermal spray process or the like to deposit and securely bond the coating on the component.

One drawback of the abradable ceramic coating is its vulnerability to erosion and spalling. For example, spalling may occur as a loss of portions of the coating that detach from the component. Loss of the coating increases clearance between the outer air seal and the blade tips and is detrimental to turbine engine efficiency. One cause of spalling is the elevated temperature within the turbine section, which can cause sintering of the ceramic coating. The sintering causes the coating to shrink, which produces stresses between the coating and the component. If the stresses are great enough, the coating may delaminate and detach from the component.

One proposed solution for improving spalling and delamination resistance is to use a ceramic composite having a higher thermal resistance than a typical ceramic coating such that the ceramic material does not reach its sintering temperature during engine operation. One potential hurdle to using the ceramic composite is that it may have a relatively complex composite architecture that may preclude forming the ceramic composite directly on the substrate, such as by using the thermal spray process that is used for the ceramic coating.

US 2004/0129370 A1 discloses a joining material. US 6099671 discloses a method of adhering ceramic foams. US 2003/0207155 describes hybrid ceramic material composed of insulating and structural ceramic layers. US 5834108 discloses a multi-layered ceramic porous body.

Accordingly, there is a need for a thermal barrier system having enhanced thermal resistance and a method for bonding the thermal barrier system to a component.

### SUMMARY OF THE INVENTION

An example composite article in accordance with the invention as claimed in claim 1.

In manufacturing the composite article, an intermediate in accordance with the invention is formed and includes the substrate, the ceramic member on the substrate, and a ceramic precursor between the substrate and the ceramic member. For example, the ceramic precursor is a ceramic powder slurry.

A method of securing the ceramic member to a substrate in accordance with the invention is claimed in claim 9.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows.
Figure 1 illustrates an example gas turbine engine.
Figure 2 illustrates a turbine section of the gas turbine engine.
Figure 3 illustrates a portion of a seal member within the turbine section.
Figure 4 illustrates the seal member with an optional bond coat.
Figure 5 illustrates an example method for securing a ceramic member to a substrate.

### DETAILED DESCRIPTION OF THE PREFERRED EMBODIMENT

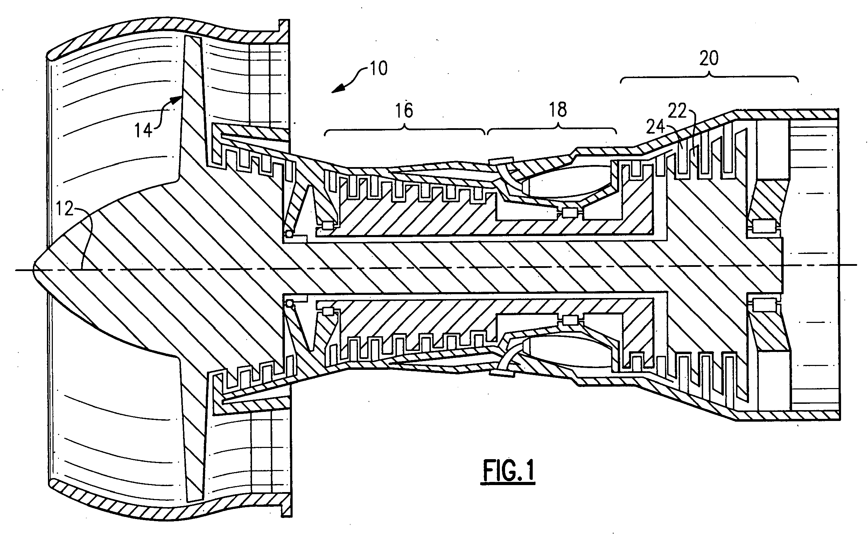

Figure 1 illustrates selected portions of an example gas turbine engine 10, such as a gas turbine engine 10 used for propulsion. In this example, the gas turbine engine 10 is circumferentially disposed about an engine centerline 12. The engine 10 includes a fan 14, a compressor section 16, a combustion section 18 and a turbine section 20 that includes turbine blades 22 and turbine vanes 24. As is known, air compressed in the compressor section 16 is mixed with fuel and burned in the combustion section 18 to produce hot gases that are expanded in the turbine section 20. Figure 1 is a somewhat schematic presentation for illustrative purposes only and is not a limitation on the disclosed examples. Additionally, there are various types of gas turbine engines, many of which could benefit from the examples disclosed herein, which are not limited to the design shown.

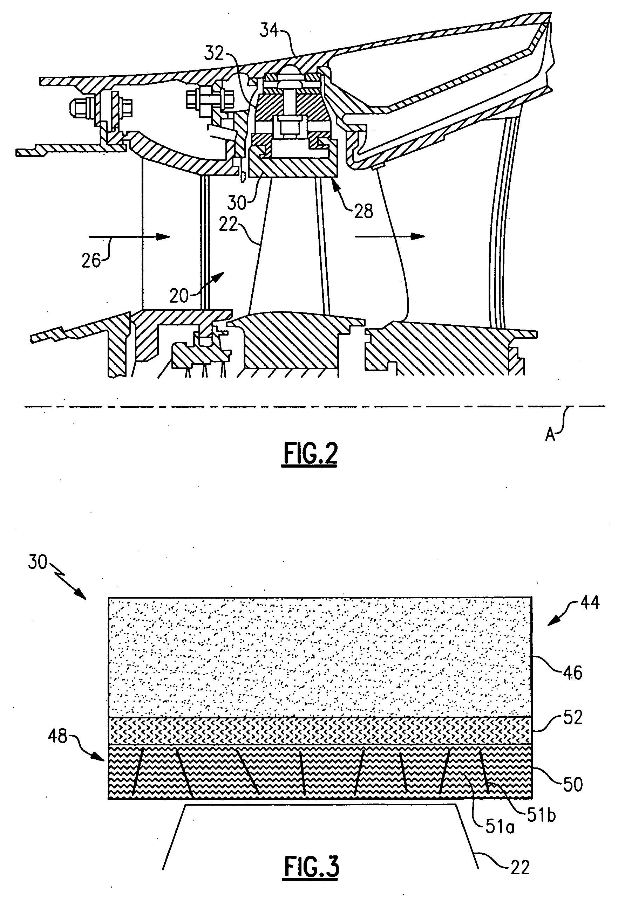

Figure 2 illustrates selected portions of the turbine section 20. The turbine blade 22 receives a hot gas flow 26 from the combustion section 18 (Figure 1). The turbine section 20 includes a blade outer air seal system 28 having a seal member 30 that functions as an outer wall for the hot gas flow 26 through the turbine section 20. The seal member 30 is secured to a support 32, which is in turn secured to a case 34 that generally surrounds the turbine section 20. For example, a plurality of the seal members 30 are circumferentially located about the turbine section 20.

Figure 3 illustrates an example portion 44 of the seal member 30. In this example, the seal member 30 includes a substrate 46 having a thermal barrier system 48 disposed thereon. The thermal barrier system 48 includes an abradable ceramic member 50, such as a ceramic matrix-ceramic fiber composite, and a ceramic bond coat 52 between the ceramic member 50 and the substrate 46. Although a particular thermal barrier system 48 is shown, it is to be understood that the disclosed examples are not limited to the illustrated configuration and may include additional layers. Furthermore, although the seal member 30 is shown, it is to be understood that the disclosed examples may also be applied to other types of engine or non-engine components.

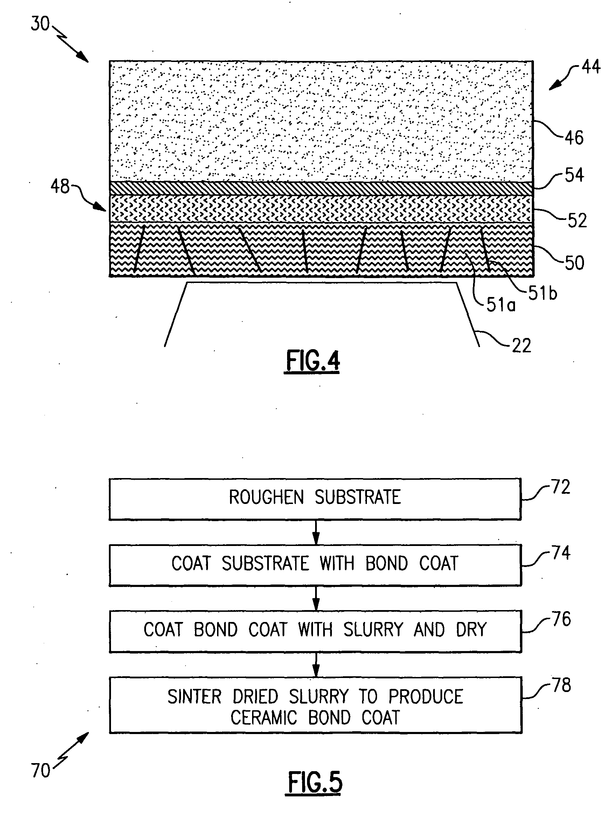

Optionally, as illustrated in Figure 4, the thermal barrier system 48 additionally includes a bond coat 54 (or other suitable material, e.g., aluminides, Ni chrome as is known in the art) between the ceramic bond coat 52 and the substrate 46 to provide a desired roughness for bonding. The bond coat 54 may include MCrAlY, where the M is at least one of nickel, cobalt, iron, or a combination thereof, Cr is chromium, Al is aluminum, and Y is yttrium and may include other oxygen active elements. Alternatively, the bond coat (54) includes nickel and chrome, or nickel, chrome, and aluminum.

In the disclosed example, the ceramic bond coat 52 includes at least one of zirconia, zirconia silicate, alumina, or mullite. Given this description, one of ordinary skill in the art will recognize other types of ceramic materials that may be used.

The ceramic member 50 is a pre-formed and pre-sintcred separate piece that is then secured to the substrate 46 using the ceramic bond coat 52. For example, the ceramic member 50 is a pre-formed ceramic matrix composite, such as a composite having a ceramic matrix 51 a and ceramic fibers 51b dispersed within the ceramic matrix 51a. The ceramic member 50 may comprise other types of ceramic structures, such as closed cell foams described in United States Patent Application 11/755,281 or other porous structures. In one example, the ceramic matrix 51a comprises yttria stabilized zirconia (e.g., 7wt% yttria stabilized zirconia), hafnia, zirconia, gadolinia, mullite, alumina, or combinations thereof. The ceramic fibers 51b comprise yttria stabilized zirconia, hafnia, zirconia, gadolinia, mullite, alumina, or combinations thereof disbursed through the ceramic matrix. In a further example, the hafnia, zirconia, or gadolinia of the disclosed examples is selected from a composition disclosed in U.S. Patent No. 6,284,323 or U.S. Patent No. 6,924,040.

The thickness of the ceramic member 50 may vary, depending on the desired level of thermal resistance required and amount of space available in the engine 10. In one example, the thickness of the ceramic member is about 100 mils (2.54 mm) or less. In a further example, the thickness is between about 10 mils (0.25 mm) and 75 mils (1.91 mm). However, in other examples, the thickness may be 0.25 inches (6.25 mm) or 0.75 inches (19 mm), or greater.

Pre-forming the ceramic member 50 and later attaching it to the substrate 46 rather than forming the ceramic member 50 directly on the substrate 46 has several benefits. For example, using the ceramic bond coat 52 eliminates the need to use metallic braze materials which are detrimental to the mechanical integrity of the substrate 46. The ceramic bond coat 52 also allows other processing techniques to be used in manufacturing a thermal barrier besides or in addition to the coating methods previously used. Furthermore, the ceramic bond coat 52 allows composite architectures having greater thermal resistance to be used as thermal barriers rather than only sprayed coatings that have been used previously. Thus, the structure of the thermal barrier is not limited by the spray/deposition processing technique. It is to be understood that non-composites may also be secured to the substrate according to the disclosed examples.

One example method for manufacturing the thermal barrier system 48 includes sintering a ceramic precursor between the substrate 46 and the ceramic member 50 to form the ceramic bond coat 52 and thereby secure the ceramic member 50 to the substrate 46. As can be appreciated, various additional optional steps may be used to enhance bonding, form additional layers, or the like. The term "pyrolysis" and its variations refer generically to thermal treatments, such as sintering or other thermal processes.

Figure 5 illustrates one example method 70 that incorporates the sintering step of forming the ceramic bond coat 52. In this example, the substrate 46 is roughened at step 72 and coated at step 74 with the bond coat 54, although in other examples the bond coat 54 may not be used, Roughening the substrate 46 provides the benefit of allowing the bond coat 54 to mechanically interlock with the substrate 46 for enhanced bonding. The bond coat 54 may be deposited onto the substrate 46 in a known manner, such as by cathodic arc deposition, thermal spray, vapor deposition, or other known process.

At step 76, the bond coat 54 is coated with a slurry having a ceramic precursor disbursed within a solvent, such as water, and the ceramic member 50 is placed onto the slurry coating. Alternatively, the slurry is applied to the ceramic member 50 and then placed onto the substrate 46. The slurry infiltrates pores within the ceramic member 50 and pores within the substrate 46 or bond coat 54 such that after pyrolysis the ceramic bond coat 52 mechanically interlocks with the ceramic member 50 and the substrate 46 or the bond coat 54. Optionally, pressure may be applied to compress the ceramic member 50 and the substrate 46 together.

The slurry may be deposited using a process that is suitable for uniformly distributing the slurry. For example, a tape casting method may be used or manual deposition. The slurry is applied with a desired thickness that depends on the pore sizes of the substrate 46 and the ceramic member 50 and desired thickness of the ceramic bond coat 52, for example. That is, less slurry may be required for relatively smaller pores and more slurry may be desired for relatively larger pores. Additionally, less slurry may be used for a relatively thinner ceramic bond coat 52, and more slurry may be used for a relatively thicker ceramic bond coat 52. In one example, the slurry is applied with a thickness of about 10 mils (0.254 mm) or less, which is a suitable amount for infiltrating the pores without forming a thick layer between the substrate 46 and the ceramic member 50 that would increase the overall thickness of the thermal barrier system 48.

The ceramic precursor of the slurry is a ceramic powder preferably of at least one of the ceramic materials described above. The ceramic powder is later pyrolized to form the ceramic bond coat 52. For example, the slurry includes between about 40wt% and about 60wt% of the ceramic powder with a balance being the solvent. In a further example, the slurry includes about 50wt% of the powder and a balance of the solvent. In some examples, the slurry also includes a polymer binder, such as polyvinyl alcohol in an amount between about 1wt% and about 30wt% to increase a viscosity of the slurry. In a further example, the slurry includes about 10wt% of the polymer binder with a balance of the ceramic powder and the solvent. Alternatively, or instead of the ceramic powder, the slurry may include other types of ceramic precursors that transform during pyrolysis into the ceramic bond coat 52, such as pre-ceramic polymers, partially sintered powders, or inorganic precursors.

After coating the slurry, the slurry is dried to remove the solvent, such as by heating the substrate 46, bond coat 54 (if used), slurry, and ceramic member 50 at a predetermined temperature for a predetermined amount of time. If binder is used, the drying may also include removing the binder, such as by heating at a temperature that melts or decomposes the binder into gaseous products. Optionally, drying and/or binder removal may be incorporated into pyrolizing step 78. After drying and before pyrolysis, the "green" ceramic bond coat may be strong enough, at least in some examples, to secure the ceramic member 50 to the substrate 46. The strength of the "green" ceramic bond coat provides the benefit of holding the substrate 46 and ceramic member 50 together during movement to a subsequent step for further processing, for example. A clamp or the like may additionally be used if greater holding force is desired.

At the pyrolizing step 78, the substrate 46, bond coat 54 (if used), "green" ceramic bond coat, and ceramic member 50 are heated at a predetermined pyrolysis temperature. In accordance with the invention, in this case the pyrolysis temperature is a sintering temperature of the ceramic powder. The ceramic particles densify to produce the ceramic bond coat 52, which secures the ceramic member 50 to the substrate 46.

In the disclosed examples, the pyrolysis temperature is below a predetermined threshold temperature to avoid damaging the ceramic member 50 and the substrate 46. For example, above the threshold temperature, the ceramic member 50 may sinter or the substrate 46 (e.g., a nickel alloy) may oxidize. In one example, the threshold temperature is between about 2000°F (1093°C) and 2500°F (1371°C).

In some examples, the difference between the pyrolysis temperature and the threshold temperature is determined through material selection and/or manufacturing process control. In accordance with the invention, the sintering temperature of the material selected for the ceramic powder is lower than the sintering temperature of the material(s) selected for the ceramic member 50. Additionally, the size of the powder particles may influence the sintering temperature. That is, using relatively smaller sized powder particles lowers the sintering temperature and using relatively larger sized powder particles increases the sintering temperature. Thus, in some examples, the ceramic material selected for the ceramic bond coat 52 may be the same as the ceramic material selected for the ceramic member 50, but by using relatively small sized powder particles, the sintering temperature for forming the ceramic bond coat 52 avoids damaging the ceramic member 50.

The powder particles are nano-sized and comprise a sintering temperature below about 2200°F (1204°C), which is below the sintering temperature of the ceramic member 50. The term "nano-sized" refers to an average particle size that is less than one micrometer. In one example, the nano-sized particles comprise a nominal average size between about 1 nanometer and 100 nanometers.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

## Claims

1. A composite article (30) comprising:
a substrate (46);
a ceramic member (50) at least partially on the substrate;
a ceramic bond coat (52) for securing the substrate (46) and the ceramic member (50) together; **characterised in that**
the ceramic member (50) has a first sintering temperature and the ceramic bond coat (52) comprises a ceramic powder having a second sintering temperature that is less than the first sintering temperature, wherein the ceramic powder comprises nano-sized powder particles having an average particle size that is less than one micrometer and a sintering temperature below 2200°F (1204°C).

2. The composite article as recited in Claim 1, wherein the ceramic bond coat (52) includes at least one of zirconia, zirconia silicate, alumina, or mullite.

3. The composite article as recited in Claim 1 or 2, wherein the substrate (46) comprises a turbine blade outer air seal.

4. The composite article as recited in Claim 1 or 3, wherein the ceramic member (50) comprises zirconia, for example yttria stabilized zirconia.

5. The composite article as recited in any preceding Claim, wherein the ceramic member (50) comprises a ceramic matrix composite, for example comprising a ceramic reinforcement (51b) disbursed within a ceramic matrix (51a).

6. The composite article as recited in Claim 5, wherein the ceramic reinforcement (51b) includes fibers comprising yttria stabilized zirconia, zirconia, gadolinia, hafnia, or combinations thereof and/or the ceramic matrix (51a) comprises at least one of yttria stabilized zirconia, hafnia, zirconia, gadolinia, mullite, or alumina.

7. The composite article as recited in any of Claims 1 to 4, wherein the ceramic member (50) comprises a closed cell ceramic foam.

8. The composite article as recited in any preceding Claim further comprising a bond coat (54) disposed between the substrate (46) and the ceramic bond coat (52), wherein the bond coat (54) comprises at least one of nickel, cobalt, iron, chromium, aluminum, or yttrium

9. A method of securing a ceramic member (50) to a substrate (46), comprising:
(a) sintering a ceramic powder between the substrate (46) and the ceramic member (50) to form a ceramic bond coat (52) that secures the ceramic member (50) to the substrate (46);
wherein said step (a) includes heating at a temperature below a sintering temperature of the ceramic member (50);
wherein the ceramic powder comprises nano-sized powder particles having an average particle size that is less than one micrometer and a sintering temperature below 2200°F (1204°C).

10. The method as recited in Claim 9, wherein the ceramic powder comprises a thickness of 10 mils (0.25 mm) or less.

11. The method as recited in Claim 9 or 10, further comprising, before said step (a), applying a slurry having the ceramic powder onto the substrate (46) or the ceramic member (50), said slurry having the ceramic powder disbursed within a solvent, for example 40wt% to 60wt% of the ceramic powder and a balance of the solvent.

12. The method as recited in claim 11 wherein the slurry comprises a polymer binder, for example polyvinyl alcohol, and comprises for example 1 wt% to 30wt% of the polymer binder and a balance of the ceramic powder and the solvent, for example about 10wt% of the polymer binder and the balance of the ceramic powder and the solvent.

13. The method as recited in claims 11 or 12, wherein the ceramic powder comprises at least one of zirconia, zirconia silicate, alumina, or mullite.

14. The method as recited in any of Claims 11 to 13, further comprising removing at least a portion of a solvent within the slurry to produce an intermediate ceramic bond coat.

15. The method as recited in any of Claims 9 to 14, further comprising compressing the substrate and the ceramic member together under a pressure.

## Patentansprüche

1. Verbundartikel (30), umfassend:
ein Substrat (46);
ein Keramikelement (50), das wenigstens teilweise auf dem Substrat liegt;
einen Keramikbindungsüberzug (52) zum Sichern des Substrats (46) und des Keramikelements (50) aneinander; **dadurch gekennzeichnet, dass**
das Keramikelement (50) eine erste Sintertemperatur aufweist und der Keramikbindungsüberzug (52) ein Keramikpulver mit einer zweiten Sintertemperatur umfasst, die kleiner als die erste Sintertemperatur ist, wobei das Keramikpulver Pulverpartikel in Nanogröße mit einer mittleren Partikelgröße, die kleiner als ein Mikrometer ist, und einer Sintertemperatur unter 2200 °F (1204 °C) umfasst.

2. Verbundartikel nach Anspruch 1, wobei der Keramikbindungsüberzug (52) wenigstens eins von Zirkonoxid, Zirkonoxidsilicat, Aluminiumoxid oder Mullit beinhaltet.

3. Verbundartikel nach Anspruch 1 oder 2, wobei das Substrat (46) eine äußere Luftdichtung einer Turbinenschaufel umfasst.

4. Verbundartikel nach Anspruch 1 oder 3, wobei das Keramikelement (50) Zirkonoxid, beispielsweise Yttrium-dotiertes Zirkonoxid umfasst.

5. Verbundartikel nach einem der vorangehenden Ansprüche, wobei das Keramikelement (50) eine Keramikmatrix umfasst, die beispielsweise eine Keramikverstärkung (51b) umfasst, die in einer Keramikmatrix (51a) verteilt ist.

6. Verbundartikel nach Anspruch 5, wobei die Keramikverstärkung (51b) Fasern umfasst, die Yttrium-dotiertes Zirkonoxid, Zirkonoxid, Gadoliniumoxid, Hafniumoxid oder Kombinationen davon umfassen, und/oder die Keramikmatrix (51a) wenigstens eins von Yttrium-dotiertem Zirkonoxid, Hafniumoxid, Zirkonoxid, Gadoliniumoxid, Mullit oder Aluminiumoxid umfasst.

7. Verbundartikel nach einem der Ansprüche 1 bis 4, wobei das Keramikelement (50) einen Keramikschaum mit geschlossenen Zellen umfasst.

8. Verbundartikel nach einem der vorangehenden Ansprüche, ferner umfassend einen Bindungsüberzug (54), der zwischen dem Substrat (46) und dem Keramikbindungsüberzug (52) angeordnet ist, wobei der Bindungsüberzug (54) wenigstens eins von Nickel, Kobalt, Eisen, Chrom, Aluminium oder Yttrium umfasst.

9. Verfahren zum Sichern eines Keramikelements (50) an ein Substrat (46), umfassend:
(a) Sintern eines Keramikpulvers zwischen dem Substrat (46) und dem Keramikelement (50), um einen Keramikbindungsüberzug (52) zu bilden, der das Keramikelement (50) an dem Substrat (46) sichert;
wobei Schritt (a) Erwärmen auf eine Temperatur unter einer Sintertemperatur des Keramikelements (50) beinhaltet;
wobei das Keramikpulver Pulverpartikel in Nanogröße mit einer mittleren Partikelgröße, die kleiner als ein Mikrometer ist, und einer Sintertemperatur unter 2200 °F (1204 °C) umfasst.

10. Verfahren nach Anspruch 9, wobei das Keramikpulver eine Dicke von 10 Mils (0,25 mm) oder weniger umfasst.

11. Verfahren nach Anspruch 9 oder 10, ferner umfassend, vor Schritt (a), das Auftragen eines Schlamms, der das Keramikpulver aufweist, auf das Substrat (46) oder das Keramikelement (50), wobei der Schlamm das Keramikpulver in einem Lösungsmittel verteilt aufweist, beispielsweise 40 Gew-.% bis 60 Gew.-% des Keramikpulvers und einen Rest des Lösungsmittels.

12. Verfahren nach Anspruch 11, wobei der Schlamm ein Polymerbindemittel umfasst, beispielsweise Polyvinylalkohol, und beispielsweise 1 Gew.-% bis 30 Gew.-% des Polymerbindemittels und einen Rest des Keramikpulvers und des Lösungsmittels umfasst, beispielsweise etwa 10 Gew-% des Polymerbindemittels und den Rest des Keramikpulvers und des Lösungsmittels.

13. Verfahren nach Anspruch 11 oder 12, wobei das Keramikpulver wenigstens eins von Zirkonoxid, Zirkonoxidsilicat, Aluminiumoxid oder Mullit umfasst.

14. Verfahren nach Anspruch 11 bis 13, ferner umfassend Entfernen wenigstens eines Teils des Lösungsmittels in dem Schlamm, um einen Zwischenkeramikbindungsüberzug zu erzeugen.

15. Verfahren nach einem der Ansprüche 9 bis 14, ferner umfassend Komprimieren des Substrats und des Keramikpulvers zusammen unter einem Druck.

## Revendications

1. Article composite (30) comprenant :
un substrat (46) ;
un élément céramique (50) situé au moins partiellement sur le substrat ;
une couche de liaison céramique (52) permettant de fixer le substrat (46) et l'élément céramique (50) l'un à l'autre ; **caractérisé en ce que**
l'élément céramique (50) a une première température de frittage et la couche de liaison céramique (52) comprend une poudre céramique ayant une seconde température de frittage qui est inférieure à la première température de frittage, dans lequel la poudre céramique comprend des particules de poudre nanométriques ayant une taille de particule moyenne inférieure à un micromètre et une température de frittage en dessous de 2 200 °F (1 204 °C).

2. Article composite selon la revendication 1, dans lequel la couche de liaison céramique (52) comprend au moins un élément parmi la zircone, le silicate de zircone, l'alumine ou la mullite.

3. Article composite selon la revendication 1 ou 2, dans lequel le substrat (46) comprend un joint extérieur d'étanchéité à l'air d'aube de turbine.

4. Article composite selon la revendication 1 ou 3, dans lequel l'élément céramique (50) comprend de la zircone, par exemple de la zircone stabilisée à l'yttrium.

5. Article composite selon l'une quelconque des revendications précédentes, dans lequel l'élément céramique (50) comprend un composite à matrice céramique, comprenant par exemple un renfort céramique (51b) logé dans une matrice céramique (51a).

6. Article composite selon la revendication 5, dans lequel le renfort céramique (51b) comprend des fibres comprenant de la zircone stabilisée à l'yttrium, de la zircone, du gadolinium, de l'hafnium, ou des combinaisons de ceux-ci et/ou la matrice céramique (51a) comprend au moins un élément parmi la zircone stabilisée à l'yttrium, l'hafnium, la zircone, le gadolinium, la mullite ou l'alumine.

7. Article composite selon l'une quelconque des revendications 1 à 4, dans lequel l'élément céramique (50) comprend une mousse céramique à alvéoles fermées.

8. Article composite selon l'une quelconque des revendications précédentes comprenant en outre une couche de liaison (54) disposée entre le substrat (46) et la couche de liaison céramique (52), dans lequel la couche de liaison (54) comprend au moins un élément parmi le nickel, le cobalt, le fer, le chrome, l'aluminium ou l'yttrium.

9. Procédé de fixation d'un élément céramique (50) à un substrat (46), comprenant :
(a) fritter une poudre céramique entre le substrat (46) et l'élément céramique (50) pour former une couche de liaison céramique (52) qui fixe l'élément céramique (50) au substrat (46) ;
dans lequel ladite étape (a) comprend chauffer l'élément céramique (50) à une température inférieure à une température de frittage ;
dans lequel la poudre céramique comprend des particules de poudre nanométriques ayant une taille de particule moyenne inférieure à un micromètre et une température de frittage en dessous de 2 200 °F (1 204 °C).

10. Procédé selon la revendication 9, dans lequel la poudre céramique comprend une épaisseur de 10 millièmes de pouce (0,25 mm) ou moins.

11. Procédé selon la revendication 9 ou 10, comprenant en outre, avant ladite étape (a), appliquer une pâte ayant la poudre céramique sur le substrat (46) ou l'élément céramique (50), ladite pâte ayant la poudre céramique logée dans un solvant, par exemple 40 % en poids à 60 % en poids de la poudre céramique et un équilibre du solvant.

12. Procédé selon la revendication 11, dans lequel la pâte comprend un liant polymère, par exemple de l'alcool polyvinylique, et comprend par exemple 1 % en poids à 30 % en poids du liant polymère et un équilibre de la poudre céramique et du solvant, par exemple environ 10 % en poids du liant polymère et l'équilibre de la poudre céramique et du solvant.

13. Procédé selon les revendications 11 ou 12, dans lequel la poudre céramique comprend au moins un élément parmi la zircone, le silicate de zircone, l'alumine ou la mullite.

14. Procédé selon l'une quelconque des revendications 11 à 13, comprenant en outre retirer au moins une partie d'un solvant dans la pâte pour produire une couche de liaison céramique intermédiaire.

15. Procédé selon l'une quelconque des revendications 9 à 14, comprenant en outre comprimer le substrat et l'élément céramique ensemble au moyen d'une pression.
